# EUROPEAN PATENT SPECIFICATION

(11) **EP 0 398 948 B1**
(45) Date of publication and mention of the grant of the patent: **21.09.1994**
(21) Application number: 89902083.8
(22) Date of filing: 25.01.1989
(51) Int. Cl.: A63F 3/06, A63F 9/22

(54) **DISPLAY SYSTEM FOR DATA ASSISTED BINGO GAME**
ANZEIGESYSTEM FÜR EIN RECHNERGESTÜTZES BINGOSPIEL
SYSTEME D'AFFICHAGE POUR JEU DE LOTO ASSISTE PAR ORDINATEUR

(30) Priority: 27.01.1988 NO 880346
(43) Date of publication of application: 28.11.1990
(73) Proprietor: EGIL HESLAND A/S, N-0552 Oslo 5 (NO)
(72) Inventor: HESLAND, Egil, N-0491 Oslo 4 (NO)
(74) Representative: Gordon, Michael Vincent
(86) International application number: PCT/NO89/00008
(87) International publication number: WO 89/06998

(56) References cited:
- GB-A- 2 059 270
- GB-A- 2 105 996
- GB-A- 2 151 054
- US-A- 3 671 041
- US-A- 4 312 511
- US-A- 4 455 025
- US-A- 4 624 462
- US-A- 4 732 392

## Description

The present invention relates to a display system for a data assisted bingo game, where each individual game participant has in front of himself a computer controlled pictorial presentation of a number of bingo square nets containing bingo numbers or symbols.

In the ordinarily known form of bingo game the game participant buys a number of "bingo vouchers, pieces or boards" with nets of squares containing bingo numbers. As random numbers are brought up by a game master and called out, the game participant himself must cross out or cover those numbers in the square nets which possibly agree with the number just called out, while the master notes or in some other manner records every number called out. When a bingo result is obtained, i.e. when a participant has crossed out a full row of numbers in the square net, the game managers must make a check.

Many people, and particularly elderly persons, will often have a problem in following the game properly, especially if they have a rather high number of vouchers/square nets, and thereby they have a risk of missing bingo results achieved and thus losing prizes which rightfully should be theirs.

Special bingo boards have been constructed comprising shiftable lids to cover the individual bingo numbers in the square net. A board of this type only remedies the problems mentioned above to a small degree, since the operation of shifting a lid to a position over a bingo number takes about the same time as crossing out a bingo number with a pen in an ordinary square net. Furthermore, the necessary check for a correct bingo result by the management has just the same character as before, since every number in the complete row must be read and checked against the numbers called out.

The main object of the present invention is to remedy the difficult situation concerning comprehending the game, by providing a manner of presenting a bingo game which will aid the game participants in comprehending and following the progress of the game, and strongly increase the probability of a game participant achieving any rightful prize, and possibly also ensuring this completely.

Other objects are to make the game, charge payment, prize disbursement and number check more efficient - a simplification both of the charge payment and the number check may imply diminishing demands for personnel in the game management so that a greater part of the time may be used for the game itself.

It is known from US-A-4624462 for the game of bingo to be played electronically.

It is also known from GB-A-2151054, acknowledged in the pre-characterising portion of the present independent claim, for different games to be played by a system comprising a central apparatus and a plurality of remote uncommitted programmable apparatuses, such as microprocessors having random access program memory, each of the remote apparatuses being arranged to receive at least part of a game program from the central apparatus.

According to the present invention, however, there is provided a display system for a data assisted game in which each individual game participant has in front of himself a computer controlled pictorial presentation of a plurality of integers, which display system comprises a central computer, a master monitor connected to said computer and adapted to present selectable game data to a game master, a plurality of game monitors each with an attached reaction button and connected to said computer, at least one of said game monitors being assigned to a game participant after paying a start fee, said computer comprising a random generator for generating a random integer for display in a first field of all of said game monitors in use and of said master monitor, and a game master keyboard connected to said computer for controlling/selecting which data is to be presented on said master monitor, characterised in that
a) said computer comprises a first processor, and an interface unit with a plurality of parallel end-stages, for controlling the monitor pictures by providing correct video signals for each of said game monitors;
b) each of said game monitors in use displays a number of bingo square nets, each of which contains a plurality of bingo numbers or symbols, each of which corresponds to a random integer generated by said random generator; and
c) said computer further comprises a second processor which is adapted to respond to a present random integer from said random generator by imposing on all of said squares containing that bingo number or symbol which corresponds to said present random integer, on all of said game monitors in use, a particular indication which is maintained constant until the present game comes to an end.

The computer may be adapted to display on each individual game monitor in use, in a second field, and according to the choice of the game master by operating said keyboard, also on said master monitor, the present state of the account of the individual game monitor assigned to a game participant at any time, according to registrated start fee paid in, the number of games/square nets used and possible prizes obtained, a game monitor being automatically registrated and the associated prize being added to the account of the game participant as long as he chooses to continue playing.

The computer may be adapted to indicate on the master monitor when and where the first complete row of squares occurs, i.e. a bingo result, said computer continuously monitoring the total game state of all of said game monitors in use.

The computer may be adapted to block further retrieval of random integers from said random generator when the particular indication has been imposed to give a complete row of squares in a square net on one of the monitors in use, i.e. a bingo result.

In one arrangement, the computer is adapted for automatic display on every game monitor in use of the fact that a bingo result has occurred, whereas in another arrangement, the computer is adapted for automatic display on only that game monitor which has a bingo result that the bingo result has occurred, said automatic display being for example by flashing, or by changing colour in a special field or all over the picture background.

The computer may be adapted to respond to a signal from a pushed reaction button operated by a game participant by presenting on the master monitor the information this represents in the present phase of the game whereby the game master is able to check with the master monitor that the game participant has acted correctly, and may be adapted to maintain all game monitor pictures for a time period which has been predetermined or can be interrupted by the game master, when said reaction button has been pushed, to indicate for all participants and the game master that said game participant has detected a bingo result.

A particular indication may be imposed by darkening or blanking by colouring a complete square in such a manner that the bingo number or symbol disappears.

Alternatively, a particular indication may be imposed by changing the colour of the square to a contrasting colour, while the bingo number or symbol still is visible in the square, or by entering a ring around the bingo number or symbol in the square, or by entering a further symbol in the square.

The master monitor and every game monitor may be CRT, LCD or plasma monitors.

A more detailed description of the invention will now be made referring to a preferred embodiment shown in the drawings in which:-
Fig. 1 illustrates the display system schematically; and
Fig. 2 illustrates a game monitor forming part of the display system.

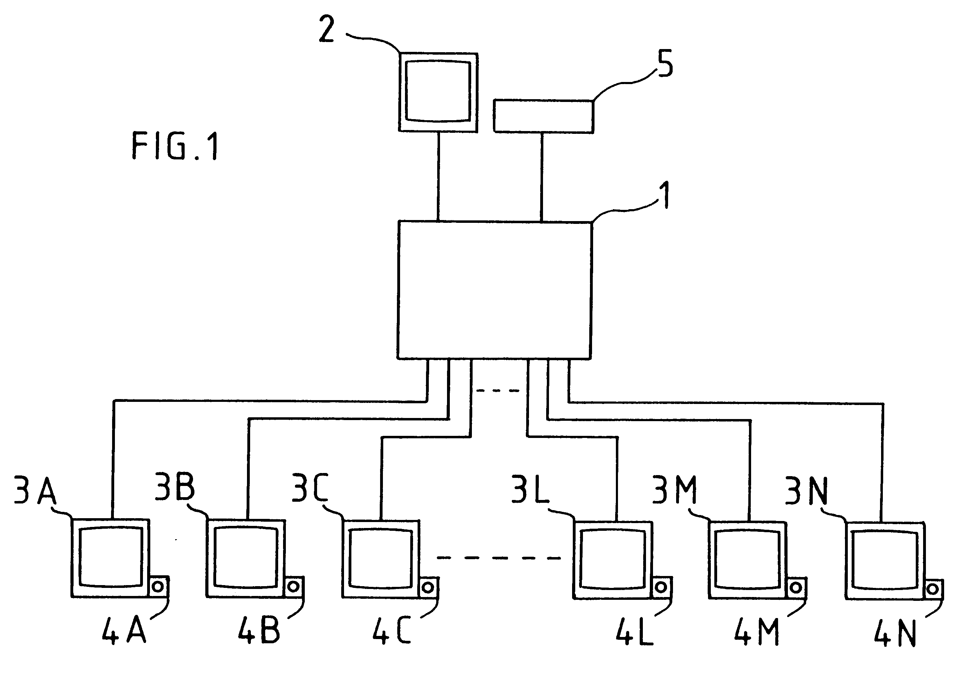

A display system in accordance with a preferred embodiment of the invention, as shown in Fig. 1, includes a central computer 1 together with attached game monitors 3A, 3B, ..., 3N. To each one of the game monitors is assigned a reaction button 4A, 4B ..., 4N to be operated by the individual game participant by pushing. The primary function of the reaction button is to be pushed, thus signalling in to the computer 1, when a game participant discovers that a bingo result (for instance one complete row) has been achieved in his game monitor. Other types of signalling from the button may be envisaged, for instance signalling certain simple data prior to the start of a game, given clearance from the game master, and having the form of a certain number of pushes of the button.

Furthermore two devices are attached to the computer 1 in order to be used by the game master, namely a master monitor 2 and a master keyboard 5. By means of the master monitor and the master keyboard, the game master is able to keep track of the progress of the game and retrieve desired information relating to the account balance of the participants. The central computer 1 is adapted and programmed to keep complete track of all movements in the game as well as the balance of each participant, and to generate the random numbers which constitute the essence of a bingo game. The computer also controls the monitor presentations and stores all necessary game information. The computer 1 therefore comprises several subprocessors: the random numbers are created in a random generator. An interface unit with a number N of parallel end-stages for the game monitors 3A - 3N is necessary to provide correct video signals for each game monitor, and a special interface also exists for driving the master monitor 2. A picture control unit provides signals for the interfaces, and the picture control unit is governed by a central processor comprising arithmetic/logic units and necessary ROM and RAM type memory stores. The random generator, the master keyboard 5 and all of the reaction buttons 4A, ..., 4N are connected to this central processor.

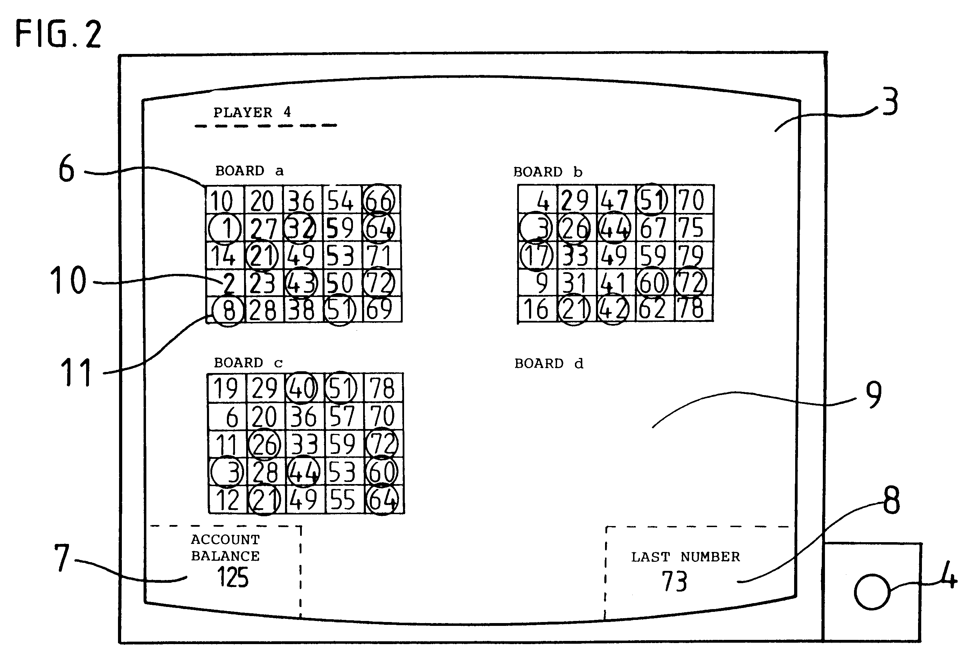

An exemplified description of the progress of a game situation shall be used in the further elucidation of the present invention, alternatingly referring to both Fig. 1 and Fig. 2.

A number of game participants, at most equal to N, are seated by some of or all of the game monitors 3. The game participants pay the start charge for one or more game rounds to the game master, who enters start charge data for each particular participant (or game monitor) in the computer 1 by means of the master keyboard 5. The computer instantly presents the balance in a special field 7 (Fig. 2) of each game monitor 3. The game master then may ask orally, or the computer may display a written request to each game participant on his assigned game monitor, or possibly both at the same time, for a declaration of the desired number of bingo boards, i.e. bingo square nets 6 in the first game, by pushing the reaction button 4 the desired number of times. The computer 1 immediately checks that the paid start charge is not exceeded, if the charge is insufficient for the desired number of bingo boards 6, and presents on the game monitor 3 the number of boards 6 which the game participant is entitled to according to desire and start charge, within the possible maximum, which is four boards in the shown embodiment example of Fig. 2.

As shown in Fig. 2, the player's desire has been to play with three boards 6, wherefore "board d" is empty, see reference number 9. In reality it is also possible to place a higher number of boards than four on one game monitor 3.

Simultaneously with the presentation of the boards 6, the balance of the game participant in field 7 is reduced in correspondence with the price of the chosen number of boards. The game master may now, by using the keyboard 5, according to wish retrieve information about the account balance of each individual game monitor 3 on the master monitor 2.

Each of the bingo boards 6 now being displayed continuously, and preferably in clear colours if the game monitors 3 have colour capacity, contains bingo numbers 10 of ordinary type, or in certain embodiments of the invention special symbols/signs. When using a simpler version of the computer 1, the same number configuration will always be displayed in that bingo board 6 which takes up a certain position in the monitor picture of the individual game monitor 3, but when a more advanced version of the computer 1 is used, new bingo number configurations may very well be generated when starting a game and be maintained only during this game, generating new configurations for every new game, and preferably functions like these may be controlled by the game master using the keyboard 5.

The number of squares in a square net or board 6 on the game monitors 3 is not necessarily 5 x 5 = 25, as shown in the example of Fig. 2, but can be adapted to the prevailing circumstances, for instance the physical size of the monitors, readability and the like. It is also possible to let the game master make variations from one game to another concerning the size of the boards, by communicating with the computer 1 via the keyboard 5.

If it is desired, the prize of the game round in question may be presented on every game monitor 3, possibly in a particular field (not shown) in the monitor picture.

Then the game itself may begin. The game master now retrieves the first random integer from the random generator of the computer 1. Primarily the integer is presented instantaneously in a distinctive field 8 on each game monitor 3 as well as the master monitor 2, but at the same time an easily visible indication 11 is presented in those squares which contain the bingo number equal to the random integer, or containing the special symbol corresponding to the integer. In the example shown in Fig. 2 the indication has the shape of a ring 11 around the bingo number, but the indication may just as well be some other clearly visible symbol, or quite simply a distinct colour change in the square around the bingo number, which itself is maintained visible. The indication 11 is stored in the computer 1 and is maintained visible until the proceeding game ends. If it is desired, the indication 11 may possibly consist in blanking the bingo number in the square by entering a new colour to cover the square completely, for instance using black colour.

The computer 1 continues retrieving random integers, either on command from the game master via the keyboard 5, or automatically with predetermined time intervals, which time intervals possibly may be regulated by the game master. When an integer emerges to give one complete row in one of the boards 6 on one of the game monitors 3, a bingo result has been achieved. It is now presented on the master monitor 2 which game monitor (and possibly which board) has a bingo result. In this situation several possibilities exist, and all of these are covered by the present invention:
a) The computer 1 communicates no particular signal to the game monitors 3. Reaction by pushing the reaction button 4 is left completely to that game participant who has the bingo board in question, with one complete row. However, this is not the preferred embodiment, presenting higher demands on the power of apprehension and speed of the participant than that which is desirable.
b) The computer 1 blocks the further retrieval of random numbers, in such a manner that there is a pause. The duration of said pause may be predetermined or be determined by the game master by using the keyboard 5. This embodiment gives the participant a better possibility of apprehending the situation, and more time for a reaction.
c) Same as b), but in addition the computer provides for, for instance by flashing or changing colour in a special field (not shown) or all over the picture background in the monitor picture of every game monitor 3, automatic information about the fact that a bingo result now is present. This is the most preferred embodiment, which ensures to a high degree that the game participant with a bingo result does not miss his complete row, but which still leaves final detection to the participant.
d) A solution which is similar to the preceding one, but in which the automatic information from the computer 1 about a bingo result is only presented on the game monitor of the lucky game participant, and in the same manners as stated in solution c), is also possible. However, this solution approaches the limit where no detection effort is necessary from the part of the participant, except from pushing the reaction button 4.
e) Of course the system offers the possibility that the computer quite simply informs on all game monitors 3 that a bingo result has occurred in for instance game monitor 3F and that the game consequently has come to an end. In this case it is not necessary to push the button. This is the limiting case as mentioned above, and it is usually not of great interest. However, this variant may be of particular interest when the participants in some way or another are strongly handicapped, for instance people who are ill in beds. The game will have more the character of a pure lottery than in the other cases, but may still present a great entertainment value.

In the above cases a) - d) which are of most interest, and where the reaction button 4 is pushed, the game master can immediately decide from the master monitor 2 if the reaction comes from the right participant.

The computer now "makes up" all accounts by adding the game prize to the balance of the winner, while all the others are held constant. If the game round continues to obtain further complete rows, the game now is carried on by a keyboard signal from the game master, and the game continues as previously described.

When the last section of a game round is finished and the last prize has been added to the account of a winner, all boards 6 are blanked out on the game monitors 3.

A new game round is then started by a new "sale of boards 6", for instance when a new game participant enters. Of course, a participant whose balance has fallen to zero, also may want to pay a new charge in order to continue to play. However, time is gained by letting several game participants pay for a number of games already from the start, and these participants are immediately ready to choose number of boards in a new game, as long as their balances cover this.

The more specific construction of the computer 1, including the video interfaces, will be obvious to a skilled person in this technical field when the previous statements have been drawn up, and constitutes no part of the present invention.

However, it is to be noted that the game monitors 3 and the master monitor 2 in the preferred and realised prototype version of the invention are colour TV monitors, but in principle one may, just as well as TV cathode ray tubes (CRT) use monitors of liquid crystal (LCD) type, plasma display devices or other suitable display devices.

Furthermore, it is of course possible to program the computer in such a manner that the prize to be gained in a game, is related in a certain way to the total start charge paid in for that game. For instance a certain percentage may be used, say 70%, so that a total fee payment of 500 units (NOK) in one game, results in a prize of 350 units in that game. Figures of interests (percentage, paid charge, and prize) may then be presented on all of the game monitors 3 if it is desired.

## Claims

1. A display system for a data assisted game in which each individual game participant has in front of himself a computer controlled pictorial presentation of a plurality of integers, which display system comprises a central computer (1), a master monitor (2) connected to said computer (1) and adapted to present selectable game data to a game master, a plurality (N) of game monitors (3) each with an attached reaction button (4) and connected to said computer (1), at least one of said game monitors (3) being assigned to a game participant after paying a start fee, said computer (1) comprising a random generator for generating a random integer for display in a first field (8) of all of said game monitors (3) in use and of said master monitor (2), and a game master keyboard (5) connected to said computer (1) for controlling/selecting which data is to be presented on said master monitor (2), characterised in that
a) said computer (1) comprises a first processor, and an interface unit with a plurality (N) of parallel end-stages, for controlling the monitor pictures by providing correct video signals for each of said game monitors (3);
b) each of said game monitors (3) in use displays a number of bingo square nets (6), each of which contains a plurality of bingo numbers or symbols (10), each of which corresponds to a random integer generated by said random generator; and
c) said computer (1) further comprises a second processor which is adapted to respond to a present random integer from said random generator by imposing on all of said squares containing that bingo number or symbol (10) which corresponds to said present random integer, on all of said game monitors (3) in use, a particular indication (11) which is maintained constant until the present game comes to an end.

2. A display system according to claim 1, characterised in that said computer (1) is adapted to display on each individual game monitor (3) in use, in a second field (7), and according to the choice of the game master by operating said keyboard (5), also on said master monitor (2), the present state of the account of the individual game monitor assigned to a game participant at any time, according to registrated start fee paid in, the number of games/square nets used and possible prizes obtained, a game monitor being automatically registrated and the associated prize being added to the account of the game participant as long as he chooses to continue playing.

3. A display system according to claim 1 or claim 2, characterised in that said computer (1) is adapted to indicate on the master monitor (2) when and where the first complete row of squares occurs, i.e. a bingo result, said computer (1) continuously monitoring the total game state of all of said game monitors (3) in use.

4. A display system according to any preceding claim, characterised in that said computer (1) is adapted to block further retrieval of random integers from said random generator when the particular indication (11) has been imposed to give a complete row of squares in a square net on one of the monitors (3) in use, i.e. a bingo result.

5. A display system according to claim 4, characterised in that said computer (1) is adapted for automatic display on every game monitor (3) in use of the fact that a bingo result has occurred.

6. A display system according to claim 4, characterised in that said computer (1) is adapted for automatic display on only that game monitor (3) which has a bingo result that the bingo result has occurred.

7. A display system according to claim 5 or claim 6, characterised in that said automatic display is by flashing, or by changing colour in a special field or all over the picture background.

8. A display system according to any preceding claim, characterised in that said computer (1) is adapted to respond to a signal from a pushed reaction button (4) operated by a game participant by presenting on the master monitor (2) the information this represents in the present phase of the game whereby the game master is able to check with the master monitor (2) that the game participant has acted correctly.

9. A display system according to claim 8, characterised in that said computer (1) is adapted to maintain all game monitor pictures for a time period which has been predetermined or can be interrupted by the game master, when said reaction button (4) has been pushed, to indicate for all participants and the game master that said game participant has detected a bingo result.

10. A display system according to any one of claims 1 to 9, characterised in that said computer (1) is adapted to impose a particular indication (11) by darkening or blanking by colouring a complete square in such a manner that the bingo number or symbol (10) disappears.

11. A display system according to any one of claims 1 to 9, characterised in that said computer (1) is adapted to impose a particular indication (11) by changing the colour of the square to a contrasting colour, while the bingo number or symbol (10) still is visible in the square, or by entering a ring around the bingo number or symbol (10) in the square, or by entering a further symbol in the square.

12. A display system according to any preceding claim, characterised in that said master monitor (2) and every game monitor (3) are CRT, LCD or plasma monitors.

## Patentansprüche

1. Anzeigesystem für ein rechnergestütztes Spiel, bei dem jeder einzelne Spielteilnehmer eine computergesteuerte bildliche Darstellung einer Vielzahl von Nummern vor sich hat, wobei das Anzeigesystem einen Zentralcomputer (1), einen mit dem genannten Computer (1) verbundenen und für die Anzeige wählbarer Spieldaten an einen Spielleiter bestimmten Hauptmonitor (2), und eine Vielzahl (N) von mit dem genannten Computer (1) verbundenen Spielmonitoren (3) mit jeweils einer zugeordneten Reaktionstaste (4) umfaßt, wobei zumindest einer der genannten Spielmonitore (3) einem Spielteilnehmer nach der Bezahlung einer Startgebühr zugeteilt wird und der genannte Computer (1) einen Zufallsgenerator für die Erzeugung einer Zufallsnummer zur Anzeige in einem ersten Feld (8) aller der genannten Spielmonitore (3) während deren Benutzung und des genannten Hauptmonitors (2), sowie eine mit dem genannten Computer (1) verbundene Spielleitertastatur (5) zur Steuerung/Auswahl der auf dem genannten Hauptmonitor (2) anzuzeigenden Daten beinhaltet, dadurch **gekennzeichnet**, daß
a) der genannte Computer (1) einen ersten Prozessor und eine Schnittstelleneinheit umfaßt mit einer Vielzahl (N) von parallelen nachgeschalteten Stufen zur Steuerung der Monitorbilder, indem korekte Videosignale an jeden der genannten Spielmonitore (3) geliefert werden;
b) jeder der genannten Spielmonitore (3) während der Benutzung eine Anzahl von Bingo-Vierecknetzen (6) anzeigt, deren jedes eine Vielzahl von Bingonummern oder Symbolen (10) enthält, wobei jede von ihnen einer von dem genannten Zufallsgenerator erzeugten Zufallsnummern entspricht; und
c) der genannte Computer (1) zusätzlich einen zweiten Prozessor beinhaltet, der dafür bestimmt ist, auf eine vorliegende Zufallsnummer aus dem genannten Zufallsgenerator zu reagieren, indem allen der genannten Vierecke, die die der genannten vorliegenden Zufallsnummern entsprechende Bingonummer oder das Symbol (10) enthalten, auf allen der genannten Spielmonitore (3) während der Benutzung eine bestimmte Kennzeichnung (11) aufgeprägt wird, die solange konstant erhalten bleibt, bis das derzeitige Spiel zu einem Ende kommt.

2. Anzeigesystem nach Anspruch 1, dadurch **gekennzeichnet,** daß der genannte Computer (1) dafür bestimmt ist, auf jedem einzelnen Spielmonitor (3) während der Benutzung in einem zweiten Feld (7) und entsprechend der Auswahl des Spielleiters mittels Bedienung der genannten Tastatur (5) auch auf dem genannten Hauptmonitor (2) den derzeitigen Berichtsstand des einem Spielteilnehmer zugeteilten individuellen Spielmonitors zu jeder Zeit darzustellen, gemäß der registrierten eingezahlten Startgebühr, der Anzahl von benutzten Spielen/Vierecknetzen und möglichen gewonnenen Preisen, wobei ein Spielmonitor automatisch registriert wird und der zugeordnete Preis dem Konto des Spielteilnehmers hinzugefügt wird, solange dieser sich zum weiteren Spielen entschließt.

3. Anzeigesystem nach Anspruch 1 oder Anspruch 2, dadurch **gekennzeichnet**, daß der genannte Computer (1) dafür bestimmt ist, auf dem Hauptmonitor (2) anzuzeigen, wann und wo die erste komplette Zeile von Vierecken, d. h. ein Bingoergebnis, auftritt, wobei der genannte Computer (1) fortwährend den gesamten Spielstand aller genannter Spielmonitore (3) während der Benutzung überwacht.

4. Anzeigesystem nach einem der vorhergehenden Ansprüche, dadurch **gekennzeichnet**, daß der genannte Computer (1) dafür bestimmt ist, ein weiteres Abfragen von Zufallsnummern aus dem genannten Zufallsgenerator zu blockieren, wenn die bestimmte Kennzeichnung (11) aufgeprägt wurde und sich eine komplette Zeile von Vierecken in einem Vierecknetz auf einem der Monitore (3), d. h. ein Bingoergebnis, während der Benutzung ergeben hat.

5. Anzeigesystem nach Anspruch 4, dadurch **gekennzeichent**, daß der genannte Computer (1) dafür bestimmt ist, automatisch auf jedem Spielmonitor (3) während der Benutzung die Tatsache anzuzeigen, daß ein Bingoergebnis aufgetreten ist.

6. Anzeigesystem nach Anspruch 4, dadurch **gekennzeichnet**, daß der Computer (1) dafür bestimmt ist, lediglich auf dem Spielmonitor (3), der das Bingoergebnis aufweist, automatisch anzuzeigen, daß ein Bingoergebnis aufgetreten ist.

7. Anzeigesystem nach Anspruch 5 oder Anspruch 6, dadurch **gekennzeichnet**, daß die automatische Anzeige mittels Aufleuchten oder mittels Aufblinken oder mittels eines Farbwechsels in einem speziellen Feld oder über den gesamten Bildhintergrund erfolgt.

8. Anzeigesystem nach einem der vorhergehenden Ansprüche, dadurch **gekennzeichnet**, daß der genannte Computer (1) dafür bestimmt ist, auf ein Signal von einer gedrückten, von einem Spielteilnehmer bedienten Reaktionstaste (4) zu reagieren, indem er auf dem Haupmonitor (2) diejenige Information darstellt, die dieses Ereignis in der vorliegenden Phase des Spiels repräsentiert, wodurch der Spielleiter mit dem Hauptmonitor (2) überprüfen kann, ob der Spielteilnehmer korrekt gehandelt hat.

9. Anzeigesystem nach Anspruch 8, dadurch **gekennzeichnet**, daß der genannte Computer (1) dafür bestimmt ist, alle Bilder der Spielmonitore für eine Zeitspanne, die vorbestimmt ist oder vom Spielleiter abgebrochen werden kann, aufrecht zu erhalten, wenn die genannte Reaktionstaste (4) gedrückt worden ist, um für alle Teilnehmer und den Spielleiter anzuzeigen, daß der genannte Spielteilnehmer ein Bingoergebnis wahrgenommen hat.

10. Anzeigesystem nach einem der Ansprüche 1 bis 9, dadurch **gekennzeichnet,** daß der genannte Computer (1) dafür bestimmt ist, eine bestimmte Kennzeichnung (11) mittels Schwärzung oder mittels Abdeckung durch Einfärbung eines kompletten Vierecks in einer solchen Weise aufzuprägen, daß die Bingonummer oder das Symbol (10) verschwindet.

11. Anzeigesystem nach einem der Ansprüche 1 bis 9, dadurch **gekennzeichnet**, daß der genannte Computer (1) dafür bestimmt ist, eine bestimmte Kennzeichnung (11) mittels Änderung der Farbe des Vierecks in eine kontrastierende Farbe aufzuprägen, wobei die Bingonummer oder das Symbol (10) in dem Viereck noch sichtbar ist, oder mittels Einbringens eines Rings um die Bingonummer oder das Symbol (10) in dem Viereck, oder mittels Einbringens eines weiteren Symbols in das Viereck.

12. Anzeigesystem nach einem der vorhergehenden Ansprüche, dadurch **gekennzeichnet**, daß der genannte Hauptmonitor (2) und jeder Spielmonitor (3) Kathodenstrahlröhren-(CRT-), Flüssigkristall- (LCD-) oder Plasma-Monitore sind.

## Revendications

1. Système d'affichage destiné à un jeu assisté par informatique, dans lequel chaque participant au jeu possède devant lui une présentation imagée, commandée par ordinateur, d'une pluralité d'entiers, lequel système d'affichage comprend un ordinateur central (1), un écran principal (2) connecté audit ordinateur (1) et destiné à présenter à un meneur de jeu des données de jeu pouvant être sélectionnées, une pluralité (N) d'écrans de jeu (3) à chacun desquels est associé un bouton de réaction (4) et qui sont chacun connectés audit ordinateur (1), au moins un desdits écrans de jeu (3) étant attribué à un participant au jeu après paiement d'un droit d'entrée, ledit ordinateur (1) comprenant un générateur de nombre aléatoire destiné à produire un entier aléatoire afin de l'afficher dans une première zone (8) de tous lesdits écrans de jeu (3) en utilisation et dudit écran principal (2), et un clavier (5) pour le meneur de jeu, qui est connecté audit ordinateur (1) et sert à commander/sélectionner quelles données doivent être présentées sur ledit écran principal (2), caractérisé en ce que :
a) ledit ordinateur (1) comprend un premier processeur et une unité d'interface ayant une pluralité (N) d'étages terminaux parallèles, servant à commander les images des écrans en produisant des signaux vidéo corrects à destination de chacun desdits écrans de jeu (3) ;
b) chacun desdits écrans de jeu (3) en utilisation affiche un certain nombre de grilles de carrés de bingo (6) qui contiennent chacune une pluralité de numéros ou de symboles de bingo (10), correspondant chacun à un entier aléatoire produit par ledit générateur de nombre aléatoire ; et
c) ledit ordinateur (1) comprend en outre un deuxième processeur qui est conçu pour répondre à un entier aléatoire courant fourni par ledit générateur de nombre aléatoire en appliquant sur tous lesdits carrés contenant le numéro ou symbole de bingo (10) qui correspond audit entier aléatoire courant, de tous lesdits écrans de jeu (3) en utilisation, une indication particulière (11) qui est maintenue constante jusqu'à ce que le jeu courant arrive à la fin.

2. Système d'affichage selon la revendication 1, caractérisé en ce que ledit ordinateur (1) est destiné à afficher sur chaque écran de jeu particulier (3) en utilisation, dans une deuxième zone (7), et en fonction du choix effectué par le meneur de jeu au moyen dudit clavier (5), ainsi que sur ledit écran principal (2), l'état courant du compte de l'écran de jeu particulier attribué à un participant au jeu à un instant quelconque, en fonction du droit d'entrée enregistré qui a été payé, le nombre de jeux/grilles de carrés utilisé et les primes éventuellement obtenues, un écran de jeu étant automatiquement enregistré et la prime associée étant ajoutée au compte du participant au jeu aussi longtemps qu'il choisit de continuer à jouer.

3. Système d'affichage selon la revendication 1 ou 2, caractérisé en ce que ledit ordinateur (1) est destiné à indiquer sur l'écran principal (2) quand et où la première rangée complète de carrés apparaît, c'est-à-dire un résultat de bingo, ledit ordinateur (1) contrôlant de façon continue l'état de jeu total de tous lesdits écrans de jeu (3) en utilisation.

4. Système d'affichage selon l'une quelconque des revendications précédentes, caractérisé en ce que ledit ordinateur (1) est destiné à arrêter toute autre extraction d'entiers aléatoires dans ledit générateur de nombre aléatoire lorsque l'indication particulière (11) a été appliquée de façon à donner une rangée complète de carrés dans une grille de carrés de l'un des écrans (3) en utilisation, c'est-à-dire un résultat de bingo.

5. Système d'affichage selon la revendication 4, caractérisé en ce que ledit ordinateur (1) est destiné à afficher automatiquement sur chaque écran de jeu (3) en utilisation le fait qu'un résultat de bingo s'est produit.

6. Système d'affichage selon la revendication 4, caractérisé en ce que ledit ordinateur (1) est destiné à afficher automatiquement qu'un résultat de bingo s'est produit sur le seul écran de jeu (3) qui a obtenu le résultat de bingo.

7. Système d'affichage selon la revendication 5 ou 6, caractérisé en ce que ledit affichage automatique est réalisé par clignotement ou par changement de couleur dans une zone spéciale ou sur toute l'étendue du fond de l'image.

8. Système d'affichage selon l'une quelconque des revendications précédentes, caractérisé en ce que ledit ordinateur (1) est destiné à répondre à un signal venant d'un bouton de réaction (4) poussé, qui a été actionné par un participant au jeu, en présentant sur l'écran principal (2) l'information que ceci représente dans la phase courante du jeu, de sorte que le meneur de jeu est en mesure de vérifier à l'aide de l'écran principal (2) que le participant au jeu a agi correctement.

9. Système d'affichage selon la revendication 8, caractérisé en ce que ledit ordinateur (1) est destiné à maintenir toutes les images des écrans de jeu pendant une durée qui a été prédéterminée ou qui peut être interrompue par le meneur de jeu, lorsque ledit bouton de réaction (4) a été poussé, pour indiquer à tous les participants et au meneur de jeu que ledit participant au jeu a détecté un résultat de bingo.

10. Système d'affichage selon l'une quelconque des revendications 1 à 9, caractérisé en ce que ledit ordinateur (1) est destiné à appliquer une indication particulière (11) en obscurcissant ou en rendant vierge par un coloriage un carré complet de manière que le numéro ou symbole de bingo (10) disparaisse.

11. Système d'affichage selon l'une quelconque des revendications 1 à 9, caractérisé en ce que ledit ordinateur (1) est destiné à appliquer une indication particulière (11) en changeant la couleur du carré en une couleur contrastante, tandis que le numéro ou symbole de bingo (10) reste encore visible dans le carré, ou bien en introduisant un anneau autour du numéro ou symbole de bingo (10) dans le carré, ou bien encore en introduisant un autre symbole dans le carré.

12. Système d'affichage selon l'une quelconque des revendications précédentes, caractérisé en ce que ledit écran principal (2) et tous les écrans de jeu (3) sont des écrans du type CRT (cathodique), LCD (à cristal liquide) ou à plasma.
